# EUROPÄISCHE PATENTSCHRIFT

(11) **EP 3 837 150 B1**
(45) Veröffentlichungstag und Bekanntmachung des Hinweises auf die Patenterteilung: **27.03.2024**
(21) Anmeldenummer: 19752679.1
(22) Anmeldetag: 07.08.2019
(51) Int. Cl.: B62D 1/181, B62D 1/187

(54) **LENKSÄULE FÜR EIN KRAFTFAHRZEUG**
STEERING COLUMN FOR A MOTOR VEHICLE
COLONNE DE DIRECTION POUR VÉHICULE AUTOMOBILE

(30) Priorität: 14.08.2018 DE 102018213679
(43) Veröffentlichungstag der Anmeldung: 23.06.2021
(73) Patentinhaber: thyssenkrupp Presta AG, 9492 Eschen (LI); thyssenkrupp AG, 45143 Essen (DE)
(72) Erfinder: RIST, Sascha, 6971 Hard (AT); KIRMSZE, Helmut, 9494 Schaan (LI)
(74) Vertreter: thyssenkrupp Intellectual Property GmbH
(86) Internationale Anmeldenummer: PCT/EP2019/071203
(87) Internationale Veröffentlichungsnummer: WO 2020/035364

(56) Entgegenhaltungen:
- WO-A1-2018/127590
- DE-A1-102007 039 361
- JP-A- 2012 081 809
- JP-A- 2019 104 368
- US-A1- 2011 162 904
- US-A1- 2018 086 363

## Beschreibung

### Stand der Technik

Die Erfindung betrifft eine Lenksäule für ein Kraftfahrzeug, umfassend eine Manteleinheit, in der eine Lenkspindel um eine Längsachse drehbar gelagert ist und die über einen Höhenverstellhebel mit der Karosserie eines Kraftfahrzeugs direkt oder indirekt verbindbar ist, wobei der Höhenverstellhebel zwei Seitenwangen aufweist, zwischen deren einander bezüglich der Längsachse gegenüberliegenden Innenseiten die Manteleinheit um eine Gelenkachse verschwenkbar aufgenommen ist, wobei die Gelenkachse oberhalb der Längsachse angeordnet ist, und die Manteleinheit in Richtung der Längsachse erstreckte Führungsnuten aufweist, wobei zwischen einer Seitenwange und der Manteleinheit jeweils mindestens ein Gleitkörper angeordnet ist, der in einer Führungsnut in Richtung der Längsachse gleitend verschiebbar ist und an einer Seitenwange abgestützt ist. Ein Verfahren zur Herstellung einer derartigen Lenksäule ist ebenfalls Gegenstand der Erfindung, wobei die Manteleinheit ein unteres Mantelrohr aufweist, welches um eine Höhenverstellachse höhenverschwenkbar mit der Karosserie eines Kraftfahrzeugs verbindbar ist und welches die Führungsnuten aufweist, und welches ein oberes Mantelrohr in Richtung der Längsachse teleskopartig verstellbar aufnimmt.

Zur Anpassung der Lenkradposition an die Sitzposition des Fahrers eines Kraftfahrzeugs sind verstellbare Lenksäulen in unterschiedlichen Ausführungsformen im Stand der Technik bekannt. Das am hinteren Ende der Lenkspindel angebrachte Lenkrad kann bei gattungsgemä-ßen Lenksäulen durch eine Höhenverstellung quer zur Richtung der Lenkspindel-Längsachse nach oben oder unten im Fahrzeuginnenraum positioniert werden.

Zur Höhenverstellung ist die Manteleinheit in ihrem in Fahrtrichtung vorderen, bezogen auf die Lenkradposition unteren Endbereich um eine horizontal, und damit quer zur Längsachse liegende Höhenverstellachse verschwenkbar an der Karosserie gelagert. Die Verstellbewegung wird von einem Verstellantrieb, beispielsweise einem elektromotorisch angetriebenen Spindeltrieb, über einen Höhenverstellhebel auf die Manteleinheit übertragen, wie beispielsweise in der US 2018/0086363 A1 beschrieben.

Der Verstellantrieb greift eingangsseitig an dem Höhenverstellhebel an, der um eine Schwenkachse verschwenkbar an einer karosseriefest anbringbaren Trageinheit gelagert ist. Bezüglich der Schwenkachse ausgangsseitig ist der Höhenverstellhebel über eine Gelenkachse an der Manteleinheit angelenkt. Die Gelenkachse erstreckt sich quer zur Längsachse durch zwei nach unten vorstehende Seitenwangen des im Querschnitt U-förmigen Höhenverstellhebels, zwischen denen die Manteleinheit gehalten ist.

Dadurch, dass die Schwenkachse des Höhenverstellhebels Abstand zur Höhenverstellachse der Manteleinheit hat, verlagert sich bei der Höhenverstellung die Gelenkachse in Richtung der Längsachse translatorisch relativ zur Höhenverstellachse.

Zum Ausgleich dieser translatorischen Verlagerung ist in der US 2018/0086363 A1 vorgeschlagen worden, zwischen dem Höhenverstellhebel und der Manteleinheit eine Ausgleichsführung auszubilden, welche beim Verstellen eine lineare Ausgleichsbewegung der Gelenkachse relativ zur Manteleinheit in Richtung der Längsachse ermöglicht.

Die bekannte Ausgleichführung umfasst zwei außen an der Manteleinheit in Richtung der Längsachse erstreckte Führungsnuten, welche auf entgegengesetzten Außenseiten jeweils mit ihrer Öffnung der Innenseite einer Seitenwange zugewandt angeordnet sind. In den als Keilnuten ausgebildeten Führungsnuten sind korrespondierende, keilförmige Gleitkörper verschiebbar angeordnet. Ein längs der Gelenkachse durch beide Seitenwangen durchgehender Gelenkbolzen erstreckt sich durch beide Seitenwangen und beide Gleitkörper hindurch. Dadurch sind die Gleitkörper in den Führungsnuten verschiebbar, und in Richtung der Längsachse an den Seitenwangen abgestützt.

Um die Steifigkeit der Lenksäule zu gewährleisten, muss die Gleitführung möglichst spielfrei eingestellt sein. Dies kann dadurch erreicht werden, dass die Gleitkörper mit einer vorgegebenen, möglichst gleichbleibenden Vorspannkraft von außen in die Führungsnuten gedrückt, d.h. verspannt werden.

In der genannten US 2018/0086363 A1 kann die Vorspannkraft dadurch eingestellt werde, dass durch den als Schraubbolzen ausgebildeten Gelenkbolzen die beiden Seitenwangen nach Art einer Schraubzwinge gegeneinander, und damit gegen die Manteleinheit verspannt werden. Nachteilig daran ist, dass der Schraubbolzen durch die beiden Gleitkörper hindurchgeht, und durch die starre Verspannung beim Anziehen des Schraubbolzens die Vorspannkraft nicht ausreichend genau einstellbar ist. Außerdem reagiert die Vorspannkraft durch die starre Verspannung empfindlich auf Maßtoleranzen und wechselnde Betriebsbedingungen, wodurch die Qualität der Führung beeinträchtigt wird. Weiters nimmt die Vorspannkraft über die Lebensdauer auf Grund von Alterungseffekten an den Gleitkörpern und den korrespondierenden Kontaktflächen, mit denen der Gleitkörper zusammenwirkt, stark ab.

Aus der US 2011/162904 A1 ist ebenfalls eine Lenksäule der eingangs genannten Art bekannt, welche die genannten Nachteile hat.

Aus der DE 102007039361 A1 ist eine gattungsgemäße Lenksäule bekannt, bei im Unterschied zu der eingangs genannten Bauweise die Führungsnuten am oberen Mantelrohr angeordnet sind, und die dadurch das Problem hat, das das untere Mantelrohr nicht direkt an der Karosserie geführt ist. Angesichts der vorangehend erläuterten Problematik ist es eine Aufgabe der vorliegenden Erfindung, eine Lenksäule mit einer verbesserten Führung anzugeben, welche einfacher einstellbar ist und im Betrieb robuster ist.

### Darstellung der Erfindung

Diese Aufgabe wird erfindungsgemäß gelöst durch eine Lenksäule mit den Merkmalen des Anspruchs 1. Vorteilhafte Weiterbildungen ergeben sich aus den Unteransprüchen. Ein erfindungsgemäßes Verfahren gemäß Anspruch 10 ermöglicht eine einfachere Einstellung einer erfindungsgemäßen Lenksäule.

Bei einer Lenksäule für ein Kraftfahrzeug, umfassend eine Manteleinheit, in der eine Lenkspindel um eine Längsachse drehbar gelagert ist und die über einen Höhenverstellhebel mit der Karosserie eines Kraftfahrzeugs direkt oder indirekt verbindbar ist, wobei der Höhenverstellhebel zwei Seitenwangen aufweist, zwischen deren einander bezüglich der Längsachse gegenüberliegenden Innenseiten die Manteleinheit um eine Gelenkachse verschwenkbar aufgenommen ist, und die Manteleinheit in Richtung der Längsachse erstreckte Führungsnuten aufweist, wobei zwischen einer Seitenwange und der Manteleinheit jeweils mindestens ein Gleitkörper angeordnet ist, der in einer Führungsnut in Richtung der Längsachse gleitend verschiebbar ist und an einer Seitenwange abgestützt ist, ist erfindungsgemäß vorgesehen, dass zwischen einem Gleitkörper und einer Seitenwange jeweils ein Stützelement angeordnet ist, welches sich von innen gegen die Seitenwange abstützt und den Gleitkörper von außen in die Führungsnut drückt.

Ein wesentlicher Unterschied zum Stand der Technik ist, dass kein zwischen den Seitenwangen durchgehender Gelenkbolzen vorhanden ist, sondern stattdessen die Lagerung der Manteleinheit in dem Höhenverstellhebel über zwei separate Stützelemente erfolgt. Die beiden Stützelemente sind in Richtung der Gelenkachse separat voneinander ausgebildet, und sind zumindest mit dem Abstand der Führungsnuten voneinander beabstandet. Die Gelenkachse ist somit axial unterbrochen. Die erfindungsgemäßen Stützelemente üben zwar auch die von beiden Seiten gegen die Manteleinheit gerichtete Vorspannkraft auf die Gleitkörper aus, aber die Kraftübertragung erfolgt jeweils von einer Seitenwange aus, und über den diese verbindenden U- bzw. bügelförmigen Höhenverstellhebel, und damit nicht wie im Stand der Technik über die Gelenkachse.

Bei der Erfindung wird die Vorspannkraft jeweils von den Seitenwangen über die Stützelemente auf die Gleitkörper, und von dort in die Gleitnuten der Manteleinheit eingeleitet.

Dadurch, dass sich die Gleitkörper über die erfindungsgemäßen Stützelemente von innen, d.h. quer zur Längsachse von der Manteleinheit aus gesehen nach außen gegen die Innenseiten der Seitenwangen abstützen, wirkt die gesamte Vorspannkraft in Richtung auf eine Aufspreizung der Seitenwangen hin nach außen, so dass diese nach außen auf Biegung beansprucht werden. Diese Biegebeanspruchung wird im Stand der Technik durch den durchgehenden, die Seitenwangen im Bereich der Gleitkörper starr miteinander verbindenden Gelenkbolzen verhindert.

Dadurch, dass erfindungsgemäß die Seitenwangen durch die Vorspannkraft auf Biegung beansprucht werden, ergibt sich die vorteilhafte Möglichkeit, über die Vorgabe der Biegesteifigkeit der Seitenwangen und den Betrag der Durchbiegung durch die Stützelemente die Vorspannkraft mit größerer Genauigkeit einzustellen. Die elastische Rückstellkraft der Seitenwangen erzeugt die federnde Vorspannkraft. Diese elastische Rückstellkraft bietet die Möglichkeit, den Verschleiß, der über die Lebensdauer an den Gleitkörpern und der Seitenwange auftritt, wirksam auszugleichen und somit auch eine ausreichend hohe Vorspannkraft am Ende der Lebensdauer bereitzustellen, so dass ein sicherer Betrieb der Lenksäule über die gesamte Lebensdauer gewährleistet werden kann.

Die Elastizität bzw. Biegesteifigkeit der Seitenwangen kann über das Elastizitätsmodul des eingesetzten Werkstoffs, vorzugsweise Stahl, die Materialstärke und die geometrische Formgebung vorgegeben werden. So führt beispielsweise eine geringere Materialstärke oder eine höhere Elastizität bei einem durch die Stützelemente vorgegebenen Betrag der Biegung zu einer geringeren Vorspannkraft, und umgekehrt eine größere Materialstärke oder eine niedrigere Elastizität zu eine höheren Vorspannkraft bei einer gegebenen Biegung.

Die in die Seitenwangen über die Stützelemente effektiv eingeleitete Biegemoment kann weiterhin durch die geometrische Anordnung der Gelenkachse am Höhenverstellhebel eingestellt werden. Je näher die Stützelemente am freien Ende der Seitenwangen des im Querschnitt U-förmigen Profils des Höhenverstellhebels angeordnet sind, umso größer ist bei einer gegebenen Vorspannkraft das wirksame Biegemoment. Entsprechend ist die Durchbiegung für eine gegebene Vorspannkraft größer, oder die erreichbare Vorspannkraft für eine maximal zulässige Durchbiegung ist geringer, als wenn die Stützelemente näher an dem Verbindungsbereich der Seitenwangen mit dem Höhenverstellhebel angreifen, wodurch die Anordnung eine höhere Steifigkeit erhält.

Durch die Gestaltung der Seitenwangen kann eine zumindest bereichsweise flache Elastizitätscharakteristik vorgegeben werden, bei der Maßtoleranzen oder wechselnde Betriebsbedingungen nur geringfügige Auswirkungen auf die wirksame Vorspannkraft haben. Dadurch wird auch die Einstellung der Vorspannkraft vereinfacht.

Erfindungsgemäß können die Seitenwangen Federelemente aufweisen, welche über die Stützelemente die Vorspannkraft als elastische Federkraft auf die Gleitkörper ausüben. Wie vorangehend beschrieben können die Seitenwangen selbst als Biegefedern ausgebildet sein, oder abschnittweise biegeelastische Abschnitte aufweisen. Der Höhenverstellhebel kann als eine Art Federbügel ausgebildet sein, zwischen dessen frei vorstehenden Seitenwangen die Manteleinheit elastisch eingespannt ist. Dabei meint "frei vorstehend", dass die Seitenwangen nicht wie im Stand der Technik durch einen durchgehenden Gelenkbolzen starr miteinander verbunden sind. Es ist denkbar und möglich, dass alternativ oder zusätzlich Federelemente an dem Höhenverstellhebel angebracht oder ausgebildet sind, beispielsweise Teller-, Well- oder Scheibenfedern, die zwischen den Seitenwangen und den Stützelementen und/oder den Gleitkörpern eingefügt sind. Dadurch ergeben sich weitere Möglichkeiten, die Elastizitätscharakteristik an die jeweiligen Anforderungen einer Lenksäule anzupassen.

Bevorzugt ist der Höhenverstellhebel als Federelement ausgebildet. Erfindungsgemäß können somit die Seitenwangen über die Stützelemente die Vorspannkraft als elastische Federkraft auf die Gleitkörper ausüben.

Bevorzugt weist der Höhenverstellhebel eine Wandstärke auf, die größer gleich 5mm ist. Bevorzugt ist der Höhenverstellhebel aus Stahl gebildet, wobei bevorzugt die Seitenwangen und der Höhenverstellhebel ein einstückiges integrales Bauteil bilden, besonders bevorzugt ein Blech-Biege-Bauteil.

In einer vorteilhaften Weiterbildung weist der Höhenverstellhebel zwischen den Seitenwangen einen Verbindungsteil auf, der sich zwischen den Seitenwangen erstreckt und diese miteinander verbindet, wobei der Verbindungsteil frei von Koppelabschnitten ist. Somit ist das Verbindungsteil des Höhenverstellhebel koppelfrei, das heißt der Verbindungsteil ist nicht mit anderen Bauteilen oder Baugruppen, abgesehen von den Seitenwangen, gekoppelt. Dieser Verbindungsteil, der sich zwischen den Seitenwangen der Höhenverstellhebels erstreckt, dient somit ausschließlich der Bereitstellung einer vorbestimmten Steifigkeit um den Höhenverstellhebel als Federelement auszubilden.

Bevorzugt kann das Verbindungsteil mindestens einen Strukturversteifungsabschnitt aufweisen, beispielsweise eine oder mehrere Sicken, die sich bevorzugt quer zur Längsachse erstrecken. Dadurch kann gezielt eine Erhöhung der Steifigkeit in einer bestimmten Richtung, beispielsweise in Längsrichtung erfolgen. Quer zur Erstreckung der Strukturversteifungsabschnitte liegt eine geringere Steifigkeit vor, so dass die Vorgabe eine vorbestimmten Welstizität und Federkraft ermöglicht wird.

Besonders bevorzugt wird die Vorspannkraft alleinig durch die Biegesteifigkeit des Höhenverstellhebels bereitgestellt. Somit sind keine weiteren und separaten Vorspannelemente erforderlich. Zusätzliche Federelemente, die zwischen den Seitenwangen und den Gleitkörpen wirken, können somit entfallen, wodurch der Herstellungs- und Montageaufwand verringert werden kann.

Es ist vorteilhaft, dass ein Stützelement und eine Seitenwange miteinander formschlüssig verbindbare Formschlusselemente aufweisen, zur Bildung einer in Richtung der Längsachse wirksamen Formschlussverbindung. Dadurch können die Gleitkörper in Richtung der Längsachse an den Seitenwangen abgestützt werden, so dass sie bei einer Höhenverstellung in Richtung der Längsachse relativ zur Manteleinheit von den Seitenwangen mitgenommen werden.

Bevorzugt ist vorgesehen, dass ein Formschlusselement einen Lagerzapfen umfasst, der in einer Lagerbohrung um die Gelenkachse drehbar gelagert ist. Die Lagerbohrung bildet als Formschlussaufnahme ein korrespondierendes Formschlusselement, in welches der Lagerzapfen formschlüssig eingreifen kann. Beispielsweise kann ein Stützelement einen zylindrischen Lagerzapfen aufweisen, oder als ein solcher ausgebildet sein, der in einer zylindrischen Lagerbohrung in einer Seitenwange und/oder einem daran abgestützten Gleitkörper drehbar gelagert ist. Vorzugsweise, aber nicht zwingend, können gleichartige Lagerzapfen auf beiden Seiten der Manteleinheit angeordnet sein. Alternativ oder zusätzlich kann eine Lagerbohrung in dem Gleikörper oder dem Stützelement ausgebildet sein, oder ein Lagerzapfen an einer Seitenwange, oder Lagerbohrungen im Gleitkörper und in der zugeordneten Seitenwange.

Es kann vorgesehen sein, dass eine Lagerbohrung als Sackbohrung ausgebildet ist. Eine derartige Sackbohrung kann in einem Stützkörper, einem Gleitkörper und/oder in einer Seitenwange eingebracht sein. Das Stützelement kann als bevorzugt zylindrischer Lagerzapfen ausgebildet sein, der gegen den Boden einer Sackbohrung in einem Gleitkörper und/oder in einer Seitenwange in Richtung der Gelenkachse abgestützt ist. Als Sackbohrung ist dabei eine Bohrung zu verstehen, die entweder einen durchgehend geschlossenen Boden, oder als Boden zumindest ein in den Bohrungsquerschnitt vorstehendes Anschlagelement aufweist, beispielsweise eine innen in den Bohrungsquerschnitt umlaufende, vorspringende Stufe, oder auch zumindest ein über den Umfang abschnittweise nach innen vorstehender Vorsprung oder dergleichen. Die Vorspannkraft kann dann über den Boden einer der Sackbohrungen oder beider Sackbohrungen über das darin als Lagerzapfen eingesetzte Stützelement auf die Seitenwange und/oder den Gleitkörper übertragen werden.

Es kann vorgesehen sein, dass ein Lagerzapfen einen Gewindeabschnitt aufweist, der in eine Gewindebohrung der Seitenwange eingeschraubt ist. Die Seitenwange kann eine in Richtung der Gelenkachse durchgehende Gewindebohrung haben, durch welche der Lagerzapfen eingeschraubt wird, bis er den Gleitkörper kontaktiert, beispielsweise in eine darin als Lagerbohrung eingebrachte Sackbohrung bis zum Anschlag am Boden eintaucht. Durch weiteres Anziehen des Gewindeabschnitts wird der Gleitkörper durch das Stützelement zwischen der Seitenwange und der Manteleinheit verspannt. Dabei wird die ausgeübte Vorspannkraft sukzessive erhöht, was mit einer elastischen Verformung durch Biegungebeanspruchung der Seitenwange einhergeht. Dadurch kann die Vorspannkraft feinfühlig und genau eingestellt werden, und bleibt über die Betriebsdauer erhalten. Um die Einstellung der Vorspannkraft dauerhaft zu fixieren, kann eine stoffschlüssige Fixierung des Gewindeabschnitts erfolgen, beispielsweise durch einen in das Gewinde eingebrachten Klebstoff, Mikroverkapselung oder Lack, und zusätzlich oder alternativ durch eine plastische Verformung, beispielsweise eine Verstemmung oder dergleichen, welche ein Lösen des Gewindes blockiert.

Eine weitere Möglichkeit ist, dass ein Lagerzapfen an einem an der Seitenwange ausgebildeten Halteelement abgestützt ist, welches bevorzugt eine - vorzugsweise von außen - in die Seitenwange eingebrachte plastische Deformation umfasst, bevorzugt eine lokale plastische Deformation. Dieses Halteelement kann durch einen Boden im Sinne der oben angegebenen Definition gebildet sein. Eine Seitenwange kann beispielsweise eine Lagerbohrung aufweisen, durch die ein Lagerzapfen von außen hindurch gesteckt werden kann, bis er einen Gleitkörper mit einer vorgegebenen Vorspannkraft belastet. Durch eine plastische Deformation, beispielsweise eine Verstemmung, die nach innen in den Querschnitt der Lagerbohrung vorspringt, kann der Lagerbolzen axial, d.h. in Richtung der Gelenkachse nach außen an der Seitenwange abgestützt werden. Die eingestellte Vorspannkraft wird dadurch von der Seitenwange über die Verstemmung auf das Stützelement, und von diesem auf den Gleitkörper übertragen. Auf diese Weise kann bei der Herstellung der Lenksäule einfach die Vorspannkraft eingestellt und durch die plastische Deformation dauerhaft und unlösbar fixiert werden. Bevorzugt sind mindestens zwei Verstemmungen vorgesehen, besonders bevorzugt vier, die bevorzugt gleichmäßig über den Umfang der Lagerbohrung verteilt sind.

Eine Weiterbildung sieht vor, dass ein Gleitkörper einstückig mit einem Stützelement ausgebildet ist. Ein Stützelement kann als Lagerstumpf oder Lagervorsprung, bevorzugt mit zylindrischem Querschnitt, an den Gleitkörper angeformt sein. Das Stützelement steht bevorzugt von der Manteleinheit aus gesehen nach außen vor, und kann in eine korrespondierende Formschlussaufnahme bzw. -ausnehmung innen in der Seitenwange eingreifen. Die Herstellung kann beispielsweise als Sinterteil oder als Kaltformteil aus Stahl, Buntmetall oder einem anderen Werkstoff erfolgen.

Ein Vorteil der vorangehend beschriebenen Ausführungsformen ist, dass ein Lagerzapfen gleichzeitig als in Richtung der Längsachse wirksames Formschlusselement, als Gelenkachse und als Kraftübertragungselement zur Übertragung der Vorspannkraft dienen kann.

Die Führungsnut ist vorzugsweise als Keilnut mit trapezfömigem Querschnitt ausgebildet. Die Gleitkörper sind dazu korrespondierend ausgebildet, und beispielsweise im Querschnitt ebenfalls trapezförmig oder auch gerundet ausgestaltet, so dass sie mit flächig oder linienförmig an den Trapezflanken der Keilnut anliegen.

In einer weiteren vorteihaften Weiterbildung kann der Gleitkörper ein gotisches Querschnittsprofil aufweisen, so dass die Führungsnut und der Gleitkörper über zwei Linienkontakte in Kontakt stehen.

Bevorzugt ist die erfindungsgemäße Lenksäule dadurch motorisch verstellbar ausgestaltet, dass ein elektromotorischer Verstellantrieb an dem Höhenverstellhebel angreift. Bevorzugt weist der Höhenverstellhebel einen Hebelarm auf, der sich ausgehend von der einen Seitenwange aus erstreckt. Beispielsweise kann als Verstellantrieb ein an sich bekannter Spindeltrieb eingesetzt werden. Der Höhenverstellhebel kann in an sich bekannter Weise als zweiarmiger Hebel ausgebildet sein, der an einer karosseriefesten Trageinheit um eine Querachse drehbar gelagert ist. Der Verstellantrieb ist bevorzugt mit dem Hebelarm gekoppelt, wobei die Kopplung an einem dem Verbindungsteil abgewandten Ende des Hebelarms angeordnet ist.

Die Lenksäule kann dadurch in Richtung der Längsachse längsverstellbar ausgestaltet sein, dass die Manteleinheit ein unteres Mantelrohr aufweist, häufig auch als äußeres Mantelrohr oder Führungskasten bezeichnet, welches mit der Karosserie eines Kraftfahrzeugs verbindbar ist und welches die Führungsnuten aufweist, und welches ein oberes Mantelrohr, häufig auch als inneres Mantelrohr bezeichnet, in Richtung der Längsachse teleskopartig verstellbar aufnimmt. Zur teleskopierenden Längsverstellung kann ebenfalls ein motorischer Verstellantrieb vorgesehen sein, der an dem unteren Mantelrohr und dem oberen Mantelrohr angreift.

In einer vorteilhaften Weiterbildung erstreckt sich die Gelenkachse orthogonal zur Längsachse, wobei die Gelenkachse oberhalb der Längsachse verläuft und der Hebelarm des Höhenverstellhebels an seinem freien Ende unterhalb der Längsachse mit dem Verstellantrieb gekoppelt ist. Mit anderen Worten ist die Gelenkachse und die Kopplungsstelle des Höhenverstellhebels mit dem Verstellantrieb auf gegenüberliegenden Seiten bezogen auf eine Bezugsebene angeordnet, wobei die Bezugsebene durch die Längsachse verläuft und diese Bezugsebene parallel zur Gelenkachse ausgerichtet ist.

Die Erfindung umfasst weiterhin ein Verfahren zur Herstellung einer Lenksäule für ein Kraftfahrzeug, umfassend eine Manteleinheit, in der eine Lenkspindel um eine Längsachse drehbar gelagert ist und die über einen Höhenverstellhebel mit der Karosserie eines Kraftfahrzeugs direkt oder indirekt verbindbar ist, wobei der Höhenverstellhebel zwei Seitenwangen aufweist, zwischen deren einander bezüglich der Längsachse gegenüberliegenden Innenseiten die Manteleinheit aufgenommen ist, wobei der Höhenverstellhebel um eine oberhalb der Längsachse angeordnete Gelenkachse verschwenkbar ist, und die Manteleinheit in Richtung der Längsachse erstreckte Führungsnuten aufweist, wobei zwischen einer Seitenwange und der Manteleinheit jeweils mindestens ein Gleitkörper angeordnet ist, der in einer Führungsnut in Richtung der Längsachse gleitend verschiebbar ist und an einer Seitenwange abgestützt ist, wobei die Manteleinheit ein unteres Mantelrohr aufweist, welches um eine Höhenverstellachse höhenverschwenkbar mit der Karosserie eines Kraftfahrzeugs verbindbar ist und welches die Führungsnuten aufweist, und welches ein oberes Mantelrohr in Richtung der Längsachse teleskopartig verstellbar aufnimmt.

Dieses umfasst die folgenden Schritte:
- Anordnen jeweils eines Stützelements zwischen einem Gleitkörper und einer Seitenwange,
- Aufbringen einer Vorspannkraft auf die Stützelemente, mit der die Gleitkörper in die Führungsnuten gedrückt werden,
- Fixieren der Stützelemente in Richtung der Vorspannkraft an den Seitenwangen.

Zwischen einem Gleitkörper, der auf der Außenseite der Manteleinheit in der Führungsnut angeordnet ist, und der Innenseite einer Seitenwange wird zumindest ein Stützelement angeordnet, wie vorangehend für die erfindungsgemäße Lenksäule beschrieben.

In diesem vormontierten Zustand kann mittels einer Krafterzeugungsvorrichtung, beispielsweise einem Andruck- oder Pressstempel, eine Vorspannkraft in Richtung der Gelenkachse, d.h. quer zur Längsachse auf die Stützelemente aufgebracht werden. Dabei werden die Stützelemente über die Gleitkörper gegen die Manteleinheit mit der Vorspannkraft belastet, also mit der Vorspannkraft in die Führungsnut angedrückt.

Wenn die vorgegebene Vorspannkraft erreicht ist, kann das Fixieren der Stützelemente in Richtung der Vorspannkraft an den Seitenwangen erfolgen, also in axialer Richtung der Gelenkachse. Durch die Fixierung wird das vorgespannte Stützelement an der Seitenwange abgestützt. Wird nun der Andruck- oder Pressstempel der Krafterzeugungsvorrichtung zurückgezogen, werden die vorgespannten Stützelemente von den Seitenwangen mit der Vorspannkraft elastisch belastet. Somit ist der Höhenverstellhebel als Federelement ausgebildet. Mit anderen Worten ist der Höhenverstellhebel selbst als Vorspannmittel ausgebildet, der die Gleitkörper von außen in die Führungsnuten drückt. Bevorzugt ist der Höhenverstellhebel als alleiniges Vorspannmittel ausgebildet, der die Gleitkörper von außen in die Führungsnuten drückt. Dadurch können weitere Federelemente oder dergleichen zur Erzeugung der Vorspannkraft entfallen.

Die Fixierung kann beispielsweise durch eine plastische Verformung der Seitenwange erfolgen, beispielsweise eine Verstemmung innen in einer das Stützelement aufnehmenden Lagerbohrung, die während der Aufbringung der Vorspannkraft erfolgt. Durch eine Messung der aufgebrachten Vorspannkraft und automatisierte Fixierung kann eine rationelle Einstellung bei der Fertigung der Lenksäule erfolgen.

Die Fixierung kann alternativ oder zusätzlich auch durch eine Übermaßpassung zwischen dem Stützelement und der Lagerbohrung erfolgen. Somit wird das Stützelement in die Lagerbohrung eingepresst, wobei nachdem die vorgegebene Einpresskraft, die mit der wirkenden Vorspannkraft korrespondiert, erreicht ist, das Einpressen gestoppt bzw. beendet wird. Durch das vorhandene Übermaß, bleibt das Stützelement in seiner erreichten Position. Somit ist die Kopplung zwischen Stützelement und Lagerbohrung als Längspressverband ausgebildet. Alternativ könnte auch ein Querpressverband zum Einsatz kommen.

Bevorzugt weist die Seitenwange einen die Lagerbohrung begrenzenden Randabschnitt auf, der mittels eines Werkzeugs lokal plastisch deformiert wird zur Bereitstellung eines in die Lagerbohrung hineinragenden Vorsprungs, an dem sich das Stützelement in Richtung der Gelenkachse abstützt. Die ausgebildeten Vorsprünge stellen somit die Verstemmung dar. Besonders bevorzugt sind mindestens zwei Vorsprünge vorgesehen, besonders bevorzugt drei oder vier. Es kann vorgesehen sein, dass die Vorsprünge gleichmäßig über den Umfang des Randbereichs verteilt ausgebildet sind.

Alternativ ist es möglich, einen Lagerzapfen mit einen Gewindeabschnitt in eine Gewindebohrung der Seitenwange einzuschrauben, bis die Gleitkörper mit der vorgegebenen Vorspannkraft in den Führungsnuten verspannt sind. Dabei wird die Vorspannkraft durch die elastische Biegebeanspruchung der Seitenwangen bzw. des Höhenverstellhebels erzeugt. Wenn der geforderte Endwert der Vorspannkraft erreicht ist, kann das Gewinde fixiert oder gesichert werden, beispielsweise wie oben beschrieben durch Stoffschluss mittels Klebstoff oder dergleichen, und/oder durch Formschluss mittels plastischer Verformung des Gewindes, der Seitenwange oder des Stützelements.

### Beschreibung der Zeichnungen

Vorteilhafte Ausführungsformen der Erfindung werden im Folgenden anhand der Zeichnungen näher erläutert. Im Einzelnen zeigen:
- Figur 1: eine erfindungsgemäße Lenksäule in einer perspektivischen Darstellung,
- Figur 2: die Lenksäule gemäß Figur 1 in einer weiteren perspektivischen Darstellung,
- Figur 3: die Lenksäule gemäß Figur 1 in einer teilweise auseinander gezogenen perspektivischen Darstellung,
- Figur 4: einen Querschnitt durch die Lenksäule gemäß Figur 1,
- Figur 5: eine Detailansicht des Querschnitts gemäß Figur 3 entlang der Gelenkachse durch ein erfindungsgemäßes Stützelement in einer ersten Ausführungsform,
- Figur 6: eine schematische Darstellung der Montage eines Stützelements gemäß Figur 5,
- Figur 7: eine Detailansicht des Querschnitts gemäß Figur 3 entlang der Gelenkachse durch ein erfindungsgemäßes Stützelement in einer zweiten Ausführungsform,
- Figur 8: eine Detailansicht des Querschnitts gemäß Figur 3 entlang der Gelenkachse durch ein erfindungsgemäßes Stützelement in einer dritten Ausführungsform.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

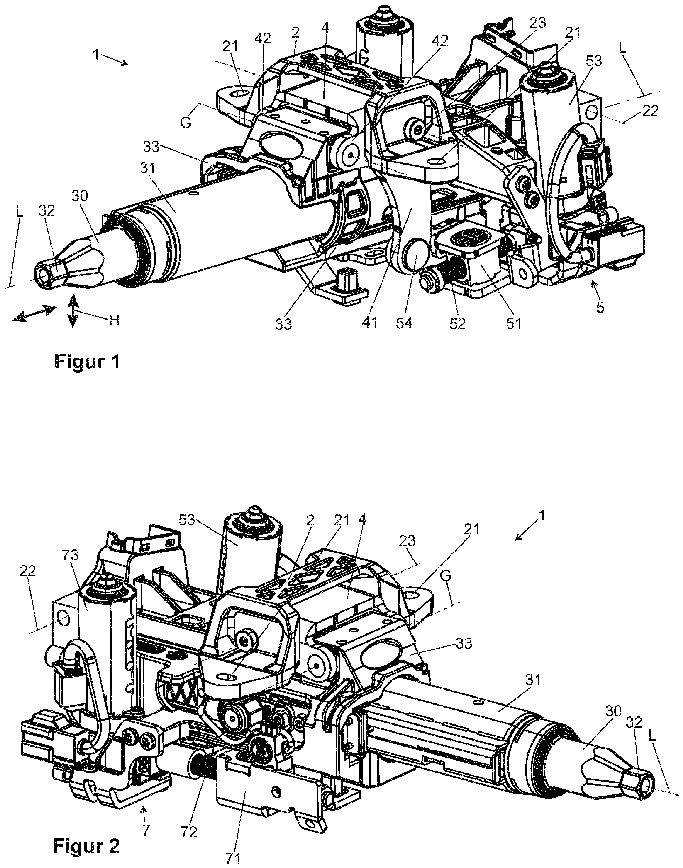

In den Figuren 1 und 2 ist eine erfindungsgemäße Lenksäule 1 schematisch in perspektivischer Ansicht schräg von hinten (bezogen auf die Fahrtrichtung eines nicht gezeigten Kraftfahrzeugs) dargestellt.

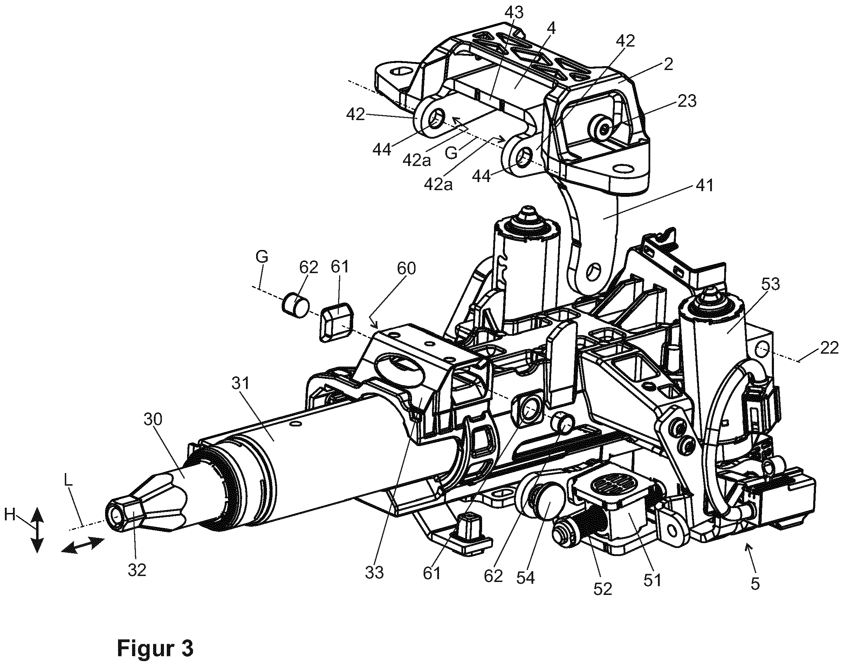

Die Lenksäule 1 kann an der Karosserie eines nicht dargestellten Kraftfahrzeugs mittels einer Konsole 2 befestigt werden, die der Übersichtlichkeit halber in der Ansicht von Figur 3 nach oben abgehoben dargestellt ist. Die Konsole 2 umfasst zur Verbindung mit der Karosserie Befestigungsmittel 21.

Eine Lenkspindel 30 ist in einem Innenmantelrohr 31, auch als oberes oder inneres Mantelrohr 31 bezeichnet, um ihre Längsachse L, die sich in Längsrichtung nach vorn erstreckt, drehbar gelagert. Hinten an der Lenkspindel 30 ist ein Befestigungsabschnitt 32 zur Befestigung eines nicht dargestellten Lenkrads ausgebildet. Das Innenmantelrohr 31 ist in einer Manteleinheit 33, auch als äußeres oder unteres Mantelrohr bezeichnet 33, in Längsrichtung, d.h. in Richtung der Längsachse L teleskopartig verschiebbar gehaltert, wie mit dem Doppelpfeil angedeutet. Wirkmäßig kann zwischen dem Innenmantelrohr 31 und äußeren Mantelrohr 33 eine Energieabsorptionseinrichtung vorgesehen sein, die zumindest ein Deformationselement aufweist, welches im Fall eines Fahrzeugcrashs plastisch deformiert wird. Solche Vorrichtung sind dem Fachmann aus dem Stand der Technik hinreichend bekannt.

Zur Höhenverstellung ist die Manteleinheit 33 um eine im unteren bzw. bezüglich der Fahrrichtung vorderen Bereich liegende, horizontale Höhenverstellachse 22 verschwenkbar, so dass ein hinten bzw. oben am Befestigungsabschnitt 32 angebrachtes Lenkrad in Höhenrichtung H nach oben oder unten verstellbar ist.

Ein Höhenverstellhebel 4 ist an der Trageinheit 2 um eine horizontal, quer zu Längsachse L liegende Hebelachse 23 drehbar gelagert. An einem eingangsseitigen Hebelarm 41 greift ein motorischer Verstellantrieb 5 an, der als Rotationsspindeltrieb ausgebildet ist, mit einer Spindelmutter 51, die mittels eines Verbindungsbolzens 54 mit dem freien Ende des Hebelarms 41 verbunden ist. In die Spindelmutter 51 greift eine Gewindespindel 52 ein, die von einer elektromotorischen Antriebseinheit 53 drehend antreibbar ist. Die Antriebseinheit 53 stützt sich in Richtung der Längsachse L an der Manteleinheit 33 ab. Durch eine motorisch angetriebene Rotation der Gewindespindel 52 wird die Spindelmutter 51 translatorisch relativ zur Manteleinheit 33 bewegt, wodurch der Höhenverstellhebel 4 um die Höhenverstellachse 23 verschwenkt wird.

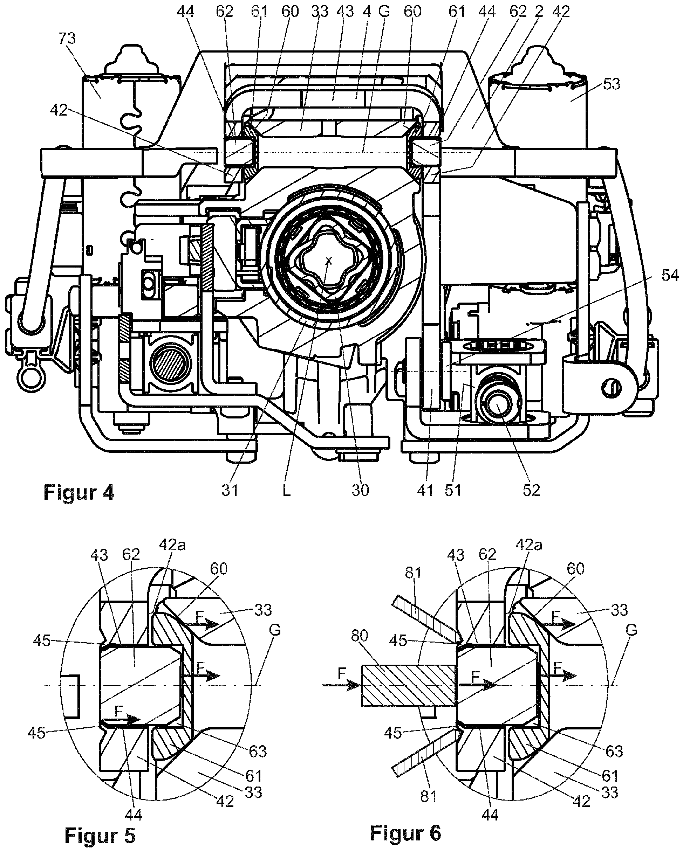

Der ausgangsseitige Hebelarm des Höhenverstellhebels 4 wird gebildet durch zwei Seitenwangen 42, die sich ausgehend von einem Verbindungsteil 43 nach unten erstrecken, so dass ein U-förmiges Profil des Höhenverstellhebels 4 gebildet wird, wie dies in der auseinander gezogenen Darstellung von Figur 4 und dem Querschnitt von Figur 5 gut erkennbar ist. Die zwei Seitenwangen 42 und das Verbindungsteil 43 sind als ein einstückiges integrales Bauteil ausgebildet.

Zwischen den gegeneinander gerichteten Innenseiten 42a der Seitenwangen 42 ist die Manteleinheit 33 aufgenommen. Im freien Endbereich der Seitenwangen 42 befindet sich eine quer zur Längsachse L verlaufende Gelenkachse G. Die Gelenkachse G ist oberhalb der Längsachse L angeordnet, so dass die Achsen sich nicht schneiden. Die Gelenkachse G durchdringt nicht das Innenmantelrohr 31, mit anderen Worten verläuft die Längsachse L oberhalb des Innenmantelrohrs 31.

Die Manteleinheit 33 ist um die Höhenverstellachse 22 verschwenkbar an einem fahrzeugfesten, nicht dargestellten Bauteil gelagert. Zum Ausgleich einer translatorischen Verlagerung, die durch den sich verändernden Abstand zwischen der Gelenkachse G und der Höhenverstellachse 22, auch als Schwenkachse bezeichnet, beim Verstellen entsteht. Dies liegt darin begründet, dass die Manteleinheit 33 um die Höhenverstellachse 22 verschwenkt wird und der Höhenverstellhebel 4 um die Hebelachse 23 verschwenkt wird, wobei die Hebelachse 23 und die Höhenverstellachse 22 zueinander beabstandet sind. Somit fallen die Drehachsen nicht zusammen, so dass ein Längsausgleich erforderlich ist. Dazu ist die Gelenkachse G in Längsrichtung, d.h. in Richtung der Längsachse L relativ zur Manteleinheit 33 durch die erfindungsgemäße Ausgestaltung verschiebbar, wie im Folgenden erläutert wird.

Die Manteleinheit 33 in Richtung der Längsachse L erstreckte Führungsnuten 60 auf, die als Keilnuten einen trapezförmigen Nutquerschnitt haben. Die Führungsnuten 60 befinden sich auf beiden Außenseiten der Manteleinheit 33 und sind zu den Innenseiten 42a der Seitenwangen 42 hin offen. In jeder Führungsnut 60 ist ein keilförmiger, an den Nutquerschnitt angepasster Gleitkörper 61 in Richtung der Längsachse L gleitend verschiebbar angeordnet. Zwischen dem Gleitkörper 61 und der Seitenwange 41 ist jeweils ein Stützelement 62 angeordnet.

Wie in den Figuren 3 und 4 erkennbar ist, liegen sich die aus den Führungsnuten 60, den Gleitkörpern 61 und den Stützelementen 62 gebildeten Führungen beiderseits einer senkrechten Spiegelebene, die sich parallel zur Längsachse L erstreckt und die Längsachse L in dieser Spiegelebene liegt, spiegelbildlich gegenüber.

Die Seitenwangen 42 weisen in Richtung der Gelenkachse G verlaufende Bohrungen 44 auf, in denen die Gleitkörper 61 in Längsrichtung, d.h. in Richtung der Längsachse L an den Seitenwangen 42 abgestützt sind.

Figur 5 zeigt in einer vergrößerten Detailansicht von Figur 4 eine erste Ausführungsform der erfindungsgemäßen Anordnung. Der Stützkörper 62 ist darin als zylindrischer Bolzen ausgebildet, der in die Bohrung 44 eingesetzt ist. Das Stützelement 62 stützt sich über in den Querschnitt der Bohrung 44 vorstehende Vorsprünge 45 von innen, d.h. auf die Innenseite 42a zu, gegen die Seitenwange 42 ab. Mit dem gegen die Manteleinheit 33 gerichteten, von der Innenseite 42 abgewandten Ende taucht der Stützkörper 62 in eine als Sackbohrung ausgebildete Lagerbohrung 63 in dem Gleitkörper 61 ein. Der Stützkörper 62 stützt sich in Richtung der Gelenkachse G am Boden der Lagerbohrung 63 von außen gegen den Gleitkörper 61 ab. Der Stützkörper kann an einem oder an beiden Enden eine Fase aufweisen, die eine entsprechende Montage vereinfacht.

Bei der Montage, wie in Figur 6 schematisch dargestellt, wird mittels eines Andruckstempels 80 von außen eine Vorspannkraft F auf das Stützelement 62 ausgeübt, wodurch der Gleitkörper 61 seinerseits mit der Vorspannkraft F von außen in die Führungsnut 60 gedrückt wird.

Während die Vorspannkraft F durch den Andruckstempel 80 vorgegeben und aufrechterhalten wird, wird mittels Verformungswerkzeugen 81 die Seitenwange 42 im Außenbereich der Bohrung 43 kalt verformt zur Ausbildung der verstemmten Vorsprünge 45, die bezogen auf die Bohrung 43 nach innen vorspringen. Nach dem Entfernen des Andruckstempels 80 ergibt sich die in Figur 5 gezeigte Montagesituation, in der die Vorspannkraft F nun durch elastische Biegeverformung der Seitenwange 42 des Höhenverstellhebels 4 über die Vorsprünge 45 auf das Stützelement 62 übertragen wird, so dass der Gleitkörper 61 dauerhaft mit der eingestellten Vorspannkraft F in die Führungsnut 60 gedrückt wird.

Im Querschnitt von Figur 4 ist erkennbar, wie die Manteleinheit 33 zwischen den beiden Seitenwangen 42 über die Stützelemente 62 elastisch eingespannt ist und die Gelenkachse G oberhalb des Innenmantelrohrs 31 verläuft. Die Gelenkachse G, die orthogonal zur Längsachse L angeordnet ist, verläuft oberhalb der Längsachse L und das freie Ende des Hebelarms 41, welches mit dem Verstellantrieb 5 über die Spindelmutter 51 gekoppelt ist, ist unterhalb der Längsachse L angeordnet. Die Achse des Verbindungsbolzens 54, der das freie Ende des Hebelarms 41 des Höhenverstellhebels 4 mit dem Verstellantrieb 5 koppelt, verläuft unterhalb der Längsachse L. Somit ist die Gelenkachse G und die Kopplungsstelle des Höhenverstellhebels 4 mit dem Verstellantrieb 5 auf gegenüberliegenden Seiten einer Bezugsebene angeordnet, wobei die Bezugsebene durch die Längsachse L verläuft und diese Bezugsebene parallel zur Gelenkachse G ist.

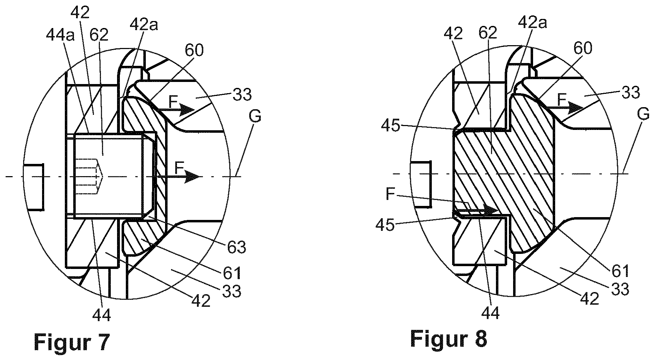

Figur 7 zeigt eine zweite Ausführungsform, bei welcher der Stützkörper 62 als Gewindebolzen mit einem Außengewinde ausgebildet ist, der in ein Innengewinde 44a in der Bohrung 44 in die Seitenwange 42 eingeschraubt ist. Das Außengewinde und Innengewinde ist bevorzugt als metrisches ISO-Gewinde nach DIN 13 ausgebildet. Durch Einschrauben - in der Zeichnung nach rechts - kann eine Vorspannkraft F auf den Gleitkörper 61 ausgeübt werden, mit der dieser von der Seitenwange 42 aus in die Führungsnut 60 gedrückt wird. Die Vorspannkraft F wird ebenfalls durch die elastische Reaktionskraft der auf Biegung beanspruchten Seitenwange 42 aufrechterhalten.

Figur 8 zeigt eine weitere Ausführungsform, die ähnlich aufgebaut ist wie die in Figur 6 gezeigte. Im Unterschied dazu sind der Gleitkörper 61 und das Stützelement 62 als einstückiges, integrales Bauteil ausgebildet. Dabei ist der den Stützkörper 61 bildende zylindrische Ansatz in der Bohrung 44 drehbar gelagert.

Zur Längsverstellung kann ein zweiter Verstellantrieb 7 vorgesehen sein, der wie der erste Verstellantrieb 5 als Spindeltrieb ausgebildet sein kann, mit einer Spindelmutter 71, in die eine relativ dazu von einer motorischen Antriebseinheit 73 drehend antreibbare Gewindespindel 72 eingeschraubt ist. Dadurch, dass dich die Gewindespindel 72 in Richtung der Längsachse L an der Manteleinheit 33 abstützt, und die Spindelmutter 71 an dem Innenmantelrohr 31, kann dieses teleskopierend relativ zur Manteleinheit 33 verstellt werden.

### Bezugszeichenliste

- 1: Lenksäule
- 2: Konsole
- 21: Befestigungsmittel
- 22: Höhenverstellachse
- 23: Hebelachse
- 30: Lenkspindel
- 31: Innenmantelrohr
- 32: Befestigungsabschnitt
- 33: Manteleinheit
- 4: Höhenverstellhebel
- 41: Hebelarm
- 42: Seitenwangen
- 43: Verbindungsteil
- 44: Bohrung
- 44a: Innengewinde
- 45: Vorsprünge
- 5,7: Verstellantrieb
- 51, 71: Spindelmutter
- 52, 72: Gewindespindel
- 53, 73: Antriebseinheit
- 54: Verbindungsbolzen
- 60: Führungsnuten
- 61: Gleitkörper
- 62: Stützelement
- 62a: Außengewinde
- 80: Andruckstempel
- 81: Verformungswerkzeug

- F: Vorspannkraft
- G: Gelenkachse
- H: Höhenrichtung
- L: Längsachse

## Patentansprüche

1. Lenksäule (1) für ein Kraftfahrzeug, umfassend eine Manteleinheit (33), in der eine Lenkspindel (30) um eine Längsachse (L) drehbar gelagert ist und die über einen Höhenverstellhebel (4) mit der Karosserie eines Kraftfahrzeugs direkt oder indirekt verbindbar ist, wobei der Höhenverstellhebel (4) zwei Seitenwangen (42) aufweist, zwischen deren einander bezüglich der Längsachse (L) gegenüberliegenden Innenseiten (42a) die Manteleinheit (33) um eine Gelenkachse (G) verschwenkbar aufgenommen ist,
wobei die Manteleinheit (33) in Richtung der Längsachse (L) erstreckte Führungsnuten (60) aufweist, wobei zwischen einer Seitenwange (42) und der Manteleinheit (33) jeweils mindestens ein Gleitkörper (61) angeordnet ist, der in einer Führungsnut (60) in Richtung der Längsachse (L) gleitend verschiebbar ist und an einer Seitenwange (42) abgestützt ist, wobei zwischen einem Gleitkörper (61) und einer Seitenwange (42) jeweils ein Stützelement (62) angeordnet ist, welches sich von innen gegen die Seitenwange (42) abstützt und den Gleitkörper (61) von außen in die Führungsnut (60) drückt,
**dadurch gekennzeichnet,**
**dass** die Gelenkachse (G) oberhalb der Längsachse (L) angeordnet ist und
**dass** die Manteleinheit (33) ein unteres Mantelrohr aufweist, welches um eine Höhenverstellachse (22) höhenverschwenkbar mit der Karosserie eines Kraftfahrzeugs verbindbar ist und welches die Führungsnuten (60) aufweist, und welches ein oberes Mantelrohr (31) in Richtung der Längsachse teleskopartig verstellbar aufnimmt.

2. Lenksäule nach Anspruch 1, **dadurch gekennzeichnet, dass** die Seitenwangen (42) Federelemente aufweisen.

3. Lenksäule nach Anspruch 1 oder 2, **dadurch gekennzeichnet, dass** ein Stützelement (62) und eine Seitenwange (42) miteinander formschlüssig verbindbare Formschlusselemente aufweisen, zur Bildung einer in Richtung der Längsachse (L) wirksamen Formschlussverbindung.

4. Lenksäule nach Anspruch 3, **dadurch gekennzeichnet, dass** ein Formschlusselement einen Lagerzapfen (62) umfasst, der in einer Lagerbohrung (63) um die Gelenkachse (G) drehbar gelagert ist.

5. Lenksäule nach Anspruch 4, **dadurch gekennzeichnet, dass** eine Lagerbohrung (63) als Sackbohrung ausgebildet ist.

6. Lenksäule nach Anspruch 4 oder 5, **dadurch gekennzeichnet, dass** ein Lagerzapfen (62) einen Gewindeabschnitt aufweist, der in eine Gewindebohrung (44a) der Seitenwange (42) eingeschraubt ist.

7. Lenksäule nach Anspruch 4 oder 5, **dadurch gekennzeichnet, dass** ein Lagerzapfen (62) an einem an der Seitenwange (42) ausgebildeten Halteelement (45) abgestützt ist.

8. Lenksäule nach einem der vorangehenden Ansprüche, **dadurch gekennzeichnet, dass** ein Gleitkörper (61) einstückig mit einem Stützelement (62) ausgebildet ist.

9. Lenksäule nach einem der vorangehenden Ansprüche, **dadurch gekennzeichnet, dass** ein elektromotorischer Verstellantrieb (5) an dem Höhenverstellhebel (4) angreift.

10. Verfahren zur Herstellung einer Lenksäule (1) für ein Kraftfahrzeug, umfassend eine Manteleinheit (33), in der eine Lenkspindel (30) um eine Längsachse (L) drehbar gelagert ist und die über einen Höhenverstellhebel (4) mit der Karosserie eines Kraftfahrzeugs direkt oder indirekt verbindbar ist, wobei der Höhenverstellhebel (4) zwei Seitenwangen (42) aufweist, zwischen deren einander bezüglich der Längsachse (L) gegenüberliegenden Innenseiten (42a) die Manteleinheit (33) aufgenommen ist, wobei der Höhenverstellhebel (4) um eine Gelenkachse (G) verschwenkbar ist, und die Manteleinheit (33) in Richtung der Längsachse (L) erstreckte Führungsnuten (60) aufweist, wobei zwischen einer Seitenwange (42) und der Manteleinheit (33) jeweils mindestens ein Gleitkörper (61) angeordnet ist, der in einer Führungsnut (60) in Richtung der Längsachse (L) gleitend verschiebbar ist und an einer Seitenwange (42) abgestützt ist, wobei die Manteleinheit (33) ein unteres Mantelrohr aufweist, welches um eine Höhenverstellachse (22) höhenverschwenkbar mit der Karosserie eines Kraftfahrzeugs verbindbar ist und welches die Führungsnuten (60) aufweist, und welches ein oberes Mantelrohr (31) in Richtung der Längsachse (L) teleskopartig verstellbar aufnimmt, wobei das Verfahren die Schritte umfasst:
- Anordnen jeweils eines Stützelements (62) zwischen einem Gleitkörper (61) und einer Seitenwange (42),
- Aufbringen einer Vorspannkraft (F) auf die Stützelemente (62), mit der die Gleitkörper (61) in die Führungsnuten (60) gedrückt werden,
- Fixieren der Stützelemente (62) in Richtung der Vorspannkraft (F) an den Seitenwangen (42),
**dadurch gekennzeichnet,**
**dass** die Gelenkachse (G) oberhalb der Längsachse (L) angeordnet ist und
**dass** die Manteleinheit (33) ein unteres Mantelrohr aufweist, welches um eine Höhenverstellachse (22) höhenverschwenkbar mit der Karosserie eines Kraftfahrzeugs verbindbar ist und welches die Führungsnuten (60) aufweist, und welches ein oberes Mantelrohr (31) in Richtung der Längsachse teleskopartig verstellbar aufnimmt.

## Claims

1. Steering column (1) for a motor vehicle, comprising a jacket unit (33) in which a steering spindle (30) is mounted rotatably about a longitudinal axis (L) and which can be connected directly or indirectly to the body of a motor vehicle via a height-adjustment lever (4), the height-adjustment lever (4) having two side cheeks (42), between whose inner sides (42a), which are opposite one another with respect to the longitudinal axis (L), the casing unit (33) is received so as to be pivotable about a hinge axis (G), wherein the casing unit (33) having guide grooves (60) extending in the direction of the longitudinal axis (L), wherein at least one sliding body (61) is arranged between a side cheek (42) and the casing unit (33), which sliding body is slidably displaceable in a guide groove (60) in the direction of the longitudinal axis (L) and is supported on a side cheek (42),
wherein a supporting element (62) is arranged between a sliding body (61) and a side cheek (42) in each case, which supporting element is supported from the inside against the side cheek (42) and presses the sliding body (61) from the outside into the guide groove (60),
**characterised in**
**that** the hinge axis (G) being arranged above the longitudinal axis (L) and that the casing unit (33) has a lower casing tube which can be connected to the body of a motor vehicle so as to be vertically pivotable about a height adjustment axis (22) and which has the guide grooves (60), and which accommodates an upper casing tube (31) so as to be telescopically adjustable in the direction of the longitudinal axis.

2. Steering column according to claim 1, **characterised in that** the side bolsters (42) have spring elements.

3. Steering column according to claim 1 or 2, **characterised in that** a support element (62) and a side cheek (42) have positive-locking elements which can be connected to one another to form a positive-locking connection which is effective in the direction of the longitudinal axis (L).

4. Steering column according to claim 3, **characterised in that** a positive-locking element comprises a bearing journal (62) which is mounted in a bearing bore (63) so as to be rotatable about the joint axis (G).

5. Steering column according to claim 4, **characterised in that** a bearing bore (63) is designed as a blind bore.

6. Steering column according to claim 4 or 5, **characterised in that** a bearing journal (62) has a threaded portion which is screwed into a threaded bore (44a) of the side cheek (42).

7. Steering column according to claim 4 or 5, **characterised in that** a bearing journal (62) is supported on a retaining element (45) formed on the side cheek (42).

8. Steering column according to one of the preceding claims, **characterised in that** a sliding body (61) is formed integrally with a support element (62).

9. Steering column according to one of the preceding claims, **characterised in that** an electromotive adjustment drive (5) acts on the height adjustment lever (4).

10. Method for producing a steering column (1) for a motor vehicle, comprising a jacket unit (33) in which a steering spindle (30) is mounted rotatably about a longitudinal axis (L) and which can be connected directly or indirectly to the body of a motor vehicle via a height adjustment lever (4), wherein the height adjustment lever (4) has two side cheeks (42), between the inner sides (42a) of which, opposite one another with respect to the longitudinal axis (L), the casing unit (33) is received, wherein the height adjustment lever (4) is pivotable about a hinge axis (G), and the casing unit (33) has guide grooves (60) extending in the direction of the longitudinal axis (L), at least one sliding body (61) being arranged between a side cheek (42) and the casing unit (33), which sliding body is slidable in a guide groove (60) in the direction of the longitudinal axis (L) and is supported on a side cheek (42), wherein the casing unit (33) has a lower casing tube which can be connected to the body of a motor vehicle so as to be vertically pivotable about a height adjustment axis (22) and which has the guide grooves (60), and which receives an upper casing tube (31) so as to be telescopically adjustable in the direction of the longitudinal axis (L),
wherein the method comprises the steps:
- Arranging a support element (62) in each case between a sliding body (61) and a side cheek (42),
- applying a pretensioning force (F) to the supporting elements (62), with which the sliding bodies (61) are pressed into the guide grooves (60),
- fixing the supporting elements (62) to the side cheeks (42) in the direction of the pretensioning force (F),
**characterised in**
**that** the hinge axis (G) being arranged above the longitudinal axis (L) and that the casing unit (33) has a lower casing tube which can be connected to the body of a motor vehicle so as to be vertically pivotable about a height adjustment axis (22) and which has the guide grooves (60), and which accommodates an upper casing tube (31) so as to be telescopically adjustable in the direction of the longitudinal axis.

## Revendications

1. Colonne de direction (1) pour un véhicule automobile, comprenant une unité d'enveloppe (33) dans laquelle un axe de direction (30) est monté rotatif autour d'un axe longitudinal (L) et qui peut être reliée directement ou indirectement à la carrosserie d'un véhicule automobile par l'intermédiaire d'un levier de réglage en hauteur (4), le levier de réglage en hauteur (4) ayant deux joues latérales (42), entre lesquelles les côtés intérieurs (42a), qui sont opposés l'un à l'autre par rapport à l'axe longitudinal (L), l'unité de boîtier (33) est reçue de manière à pouvoir pivoter autour d'un axe de charnière (G), l'unité de boîtier (33) ayant des rainures de guidage (60) s'étendant dans la direction de l'axe longitudinal (L), dans lequel au moins un corps coulissant (61) est disposé entre une joue latérale (42) et l'unité de boîtier (33), lequel corps coulissant peut être déplacé dans une rainure de guidage (60) dans la direction de l'axe longitudinal (L) et est supporté par une joue latérale (42),
dans lequel un élément de support (62) est disposé entre le corps coulissant (61) et la joue latérale (42), lequel élément de support est appuyé de l'intérieur contre la joue latérale (42) et presse le corps coulissant (61) de l'extérieur dans la rainure de guidage (60),
**caractérisé par**
l'axe d'articulation (G) est situé au-dessus de l'axe longitudinal (L) et l'unité d'habillage (33) comporte un tube d'habillage inférieur qui peut être relié à la carrosserie d'un véhicule à moteur de manière à pouvoir pivoter verticalement autour d'un axe de réglage en hauteur (22) et qui comporte les rainures de guidage (60), et qui reçoit un tube d'habillage supérieur (31) de manière à pouvoir être réglé de manière télescopique dans la direction de l'axe longitudinal.

2. Colonne de direction selon la revendication 1, **caractérisée par le fait que** les traverses latérales (42) comportent des éléments élastiques.

3. Colonne de direction selon la revendication 1 ou 2, **caractérisée par le fait qu'**un élément de support (62) et une joue latérale (42) ont des éléments de verrouillage positif qui peuvent être connectés l'un à l'autre pour former une connexion de verrouillage positif qui est efficace dans la direction de l'axe longitudinal (L).

4. Colonne de direction selon la revendication 3, **caractérisée par le fait qu'**un élément de verrouillage positif comprend un tourillon (62) monté dans un alésage (63) de manière à pouvoir tourner autour de l'axe de l'articulation (G).

5. Colonne de direction selon la revendication 4, **caractérisée par le fait qu'**un alésage de roulement (63) est conçu comme un alésage borgne.

6. Colonne de direction selon la revendication 4 ou 5, **caractérisée par le fait qu'**un tourillon de roulement (62) comporte une partie filetée qui est vissée dans un alésage fileté (44a) de la joue latérale (42).

7. Colonne de direction selon la revendication 4 ou 5, **caractérisée par le fait qu'**un tourillon de roulement (62) est supporté par un élément de retenue (45) formé sur la joue latérale (42).

8. Colonne de direction selon l'une des revendications précédentes, **caractérisée par le fait qu'**un corps coulissant (61) est formé d'un seul tenant avec un élément de support (62).

9. Colonne de direction selon l'une des revendications précédentes, **caractérisée par le fait qu'**une commande de réglage électromotrice (5) agit sur le levier de réglage de la hauteur (4).

10. Procédé de fabrication d'une colonne de direction (1) pour un véhicule automobile, comprenant une unité d'enveloppe (33) dans laquelle une tige de direction (30) est montée rotative autour d'un axe longitudinal (L) et qui peut être reliée directement ou indirectement à la carrosserie d'un véhicule automobile par l'intermédiaire d'un levier de réglage de la hauteur (4), dans lequel le levier de réglage de la hauteur (4) a deux joues latérales (42), dont les côtés intérieurs (42a) sont opposés l'un à l'autre par rapport à l'axe longitudinal (L), entre les côtés intérieurs (42a), opposés l'un à l'autre par rapport à l'axe longitudinal (L), l'unité de boîtier (33) est reçue, le levier de réglage en hauteur (4) pouvant pivoter autour d'un axe d'articulation (G), et l'unité de boîtier (33) ayant des rainures de guidage (60) s'étendant dans la direction de l'axe longitudinal (L), au moins un corps coulissant (61) est disposé entre une joue latérale (42) et l'unité de boîtier (33), lequel corps coulissant peut être déplacé dans une rainure de guidage (60) dans la direction de l'axe longitudinal (L) et est supporté par une joue latérale (42), dans lequel l'unité de carter (33) comporte un tube de carter inférieur qui peut être relié à la carrosserie d'un véhicule automobile de manière à pouvoir pivoter verticalement autour d'un axe de réglage en hauteur (22) et qui comporte les rainures de guidage (60), et qui reçoit un tube de carter supérieur (31) de manière à pouvoir être réglé de manière télescopique dans la direction de l'axe longitudinal (L),
dans lequel la méthode comprend les étapes **suivantes**
- appliquer une force de précontrainte (F) aux éléments de support (62), avec laquelle les corps coulissants (61) sont pressés dans les rainures de guidage (60),
- fixer les éléments de support (62) aux joues latérales (42) dans la direction de la force de précontrainte (F),
**caractérisé par le**
**fait que** l'axe d'articulation (G) est situé au-dessus de l'axe longitudinal (L) et que l'unité d'habillage (33) comporte un tube d'habillage inférieur qui peut être relié à la carrosserie d'un véhicule automobile de manière à pouvoir pivoter verticalement autour d'un axe de réglage en hauteur (22) et qui comporte les rainures de guidage (60), et qui reçoit un tube d'habillage supérieur (31) de manière à pouvoir être réglé de manière télescopique dans la direction de l'axe longitudinal.
